# EUROPÄISCHE PATENTSCHRIFT

(11) **EP 3 332 951 B1**
(45) Veröffentlichungstag und Bekanntmachung des Hinweises auf die Patenterteilung: **11.05.2022**
(21) Anmeldenummer: 17202093.5
(22) Anmeldetag: 16.11.2017
(51) Int. Cl.: B29C 70/48, B29C 70/44, B29C 33/76, B29C 33/38, B29C 53/82, B29C 43/10, F16J 12/00, F17C 1/16

(54) **AUFBRECHBARER KERN ZUR HERSTELLUNG EINES FASERVERBUNDBAUTEILS, VERWENDUNG EINES AUFBRECHBAREN KERNS UND VERFAHREN ZUR HERSTELLUNG EINES FASERVERBUNDBAUTEILS**
BURSTABLE CORE FOR MANUFACTURING A FIBRE COMPOSITE COMPONENT, USE OF A BURSTABLE CORE AND METHOD FOR THE PRODUCTION OF A FIBRE COMPOSITE COMPONENT
NOYAU ÉCLATABLE DESTINÉ À LA FABRICATION D'UN ÉLÉMENT STRUCTURAL COMPOSITE EN FIBRES, UTILISATION D'UN NOYAU ÉCLATABLE ET PROCÉDÉ DE FABRICATION D'UN ÉLÉMENT STRUCTURAL COMPOSITE EN FIBRES

(30) Priorität: 07.12.2016 DE 102016224367
(43) Veröffentlichungstag der Anmeldung: 13.06.2018
(73) Patentinhaber: Leichtbau-Zentrum Sachsen GmbH, 01307 Dresden (DE)
(72) Erfinder: Gruhl, Andreas, 01067 Dresden (DE); Lepper, Dr. Martin, 01279 Dresden (DE)
(74) Vertreter: Kailuweit & Uhlemann Patentanwälte Partnerschaft mbB

(56) Entgegenhaltungen:
- EP-A1- 2 468 484
- DE-A1-102010 010 876

## Beschreibung

Die Erfindung bezieht sich auf eine Anordnung aus einem Kern und einer Blasform, eine Verwendung dieses Kerns in Kombination mit der Blasform und ein Verfahren zur Herstellung eines Faserverbundbauteils.

Bei der Herstellung von Faserverbundbauteilen im Flechtprozess, speziell beim Umflechten, kommen für die Faserablage Kerne mit einfachen oder komplizierten Geometrien zum Einsatz. Die Form des Kernes bestimmt die äußere Geometrie des Faserverbundbauteiles.

Im Fachbuch *"*Handbuch Verbundwerkstoff: Werkstoffe, Verarbeitung, Anwendung" (Neitzel, M. und Mitschang, P., München, Carl Hanser Verlag, 2004 in Kapitel 3.1.4: Wiedmer, S. und Friedrich, K. "Flechten*")* werden entsprechende Kerne beschrieben.

Die Kerne müssen für die Faserablage sehr stabil sein, da beispielsweise beim Flechten hohe Zugkräfte auf den Kern wirken.

Im Fachbuch *"*Textile Werkstoffe für den Leichtbau: Techniken - Verfahren - Materialien - Eigenschaften", Cherif, Ch., Springer Verlag, 2011 in Kapitel 8: Laourine, W "Geflochtene Halbzeuge und Flechttechniken*"* werden unter anderem Schaumstoffkerne beschrieben, die im Bauteil verbleiben. Nachteilig ist der Schaumstoff nur begrenzt mechanisch stabil und das Verbleiben im Bauteil ist zudem für einige Anwendungen ungünstig, beispielsweise ist eine Konsolidierung mittels Blasformverfahren nicht möglich.

In der DE 10 2010 010 876 A1 ist ein verlorener Kern beschrieben, der eine u.a. unidirektionale Faserverstärkung aufweist und in dem die Anisotropie der thermischen Ausdehnung der Faserverstärkung zur gezielten Aufbringung von Druck auf das herzustellende Bauteil genutzt werden kann. Nachteilig erlaubt auch dieser Kern nicht die Konsolidierung des Bauteils mittels des Blasformverfahrens.

Alternativ werden verlorene Kerne, z.B. aus Wachs, eingesetzt, die nach der Bauteilherstellung ausgeschmolzen werden und daher im fertigen Bauteil nicht mehr vorzufinden sind, so dass eine Konsolidierung mittels Blasformverfahren möglich ist. Nachteilig ist das Verfahren sehr aufwändig und Wachs als Kernwerkstoff ebenfalls begrenzt zugfest.

Die EP 2 468 484 A1 beschreibt ein Verfahren zur Herstellung eines Faserverbundbauteils unter Verwendung eines wiederverwendbaren faserverstärkten Blasformhohlkernes.

Die DE 10 2015 217 144 A1 offenbart einen Blasformhohlkern aus einem Kunststoff, der eine Versteifung aus Endlosfasern, die unidirektionale Fasern sein können, aufweist. Um eine besonders maßhaltige Innengeometrie des mittels des Kerns herzustellenden Bauteils zu gewährleisten, ist die Faserverstärkung des Blasformhohlkerns so gestaltet, dass jegliche Dehnung oder Stauchung oder sonstige Formänderung verhindert wird. Das Verfahren zur Herstellung des Blasformhohlkerns ist sehr aufwändig und mit einem hohen Materialeinsatz verbunden. Die Aufgabenstellung der vorliegenden Erfindung besteht darin, einen Kern zur Herstellung von komplexen Faserverbundbauteilen und ein zugehöriges Verfahren vorzuschlagen, die die oben genannten Nachteile des Standes der Technik überwinden. Weitere Aufgabe der Erfindung ist es, eine Verwendung eines solchen Kerns anzugeben.

Die Aufgabenstellung wird gelöst durch eine Anordnung aus einem Kern und einer Blasform nach Anspruch 1, die Verwendung eines Kerns in Kombination mit einer Blasform nach Anspruch 5 und durch ein Verfahren zur Herstellung von Faserverbundbauteilen nach Anspruch 8. Bevorzugte Weiterbildungen der Erfindung sind Gegenstand von Unteransprüchen.

Der Kern der erfindungsgemäßen Anordnung aus dem Kern und einer Blasform ist ein Faserverbundelement in Form eines Hohlkörpers, der eine Faserverstärkung weitestgehend nur in einer Richtung aufweist. Die Richtung der Faserverstärkung ist dabei vorteilhaft als die Hauptbelastungsrichtung bei der Faserablage auf dem Kern gewählt. Beispielsweise beim Flechten und/oder Wickeln treten hohe Zugkräfte auf den Kern auf, welche durch die Faserverstärkung aufgenommen werden können. Die Richtung der Faserverstärkung wird häufig die Längsrichtung des Kernes sein, da bei der Faserablage die Zugkräfte zumeist in dieser Richtung wirken. Auch die aufgrund der Faserablage entstehenden Druckkräfte in Umfangsrichtung des Kernes können durch die Konstruktion aufgenommen werden.

Als Fasern können alle geeigneten Arten von Verstärkungsfasern oder Verstärkungsfaserhalbzeugen, z. B. Rovings, eingesetzt werden. Es können Natur- oder Kunstfasern, beispielsweise Glas- oder Kohlenstoff- oder Aramidfasern, oder Gemische verschiedener Fasertypen verwendet werden, wobei bevorzugt Kohlenstoff-Fasern verwendet werden.

In den Kern, der als Hohlkörper ausgebildet ist, ist erfindungsgemäß eine Blasform eingebracht. Bei Expansion der Blasform zerbricht der Kern in Richtung der Faserverstärkung, das heißt, die Bruchlinien verlaufen etwa parallel zur Richtung der Faserverstärkung, und der Umfang des Hohlkörpers vergrößert sich. Im Rahmen der Infiltration mit Matrixmaterial werden die Bruchstellen des Kernes mit Matrixmaterial gefüllt, wodurch der Kern integraler Bestandteil des Faserverbundbauteils, das mittels des Kerns hergestellt wird, wird. Vorteilhaft kann so auch eine sehr gute Oberflächengüte des herzustellenden Faserverbundbauteils im Bereich der Innenfläche erreicht werden.

Weitestgehend nur in einer Richtung bedeutet im Sinne dieser Schrift, dass der Kern lastaufnehmende Fasern nur in einer Richtung, nämlich seiner Hauptbelastungsrichtung, hat. Beispielsweise zwecks Fixierung der Faserverstärkung in der einen Richtung können Fasern auch in anderen Richtungen enthalten sein. Diese Fasern sind dann jedoch so beschaffen und angeordnet, dass das Aufbrechen des Kernes in Richtung der Faserverstärkung nicht verhindert wird.

Vorteilhaft kann mittels der Erfindung der Kern als lastaufnehmendes Element in die Gestaltung eines Faserverbundbauteils mit eingeplant werden.

Weiterhin vorteilhaft entfallen Arbeiten wie beispielsweise die Entnahme des Kernes.

In einer bevorzugten Ausgestaltung der erfindungsgemäßen Anordnung aus Kern und Blasform sind an der inneren Oberfläche des Kerns, also der Oberfläche, an der die Blasform der erfindungsgemäßen Anordnung angeordnet ist, Sollbruchstellen vorgegeben, die ein Aufbrechen des Kerns an definierten Stellen ermöglichen. Die Sollbruchstellen weisen besonders bevorzugt ihre größte Ausdehnung in Richtung der Faserverstärkung auf. Die Sollbruchstellen werden bevorzugt während der Fertigung durch die Werkzeugoberfläche und/oder durch die Inhomogenität des Materials erzeugt. Durch die Längsfasern bricht das Material in Umfangsrichtung. Vorteilhaft muss kein zusätzlicher Schritt durch Fräsen von Sollbruchstellen durchgeführt werden.

In einer weiteren bevorzugten Ausgestaltung der erfindungsgemäßen Anordnung weist der Kern an seiner inneren Oberfläche einen Liner auf. Der Liner bildet demnach die innere Mantelfläche des als Hohlkörper ausgebildeten Kerns. Dieser Liner verbleibt im Kern und kann vorteilhaft als druckdichte Blasform verwendet werden. Der Liner ist vorzugsweise aus Polyethylen (PE) und mediendicht. Vorteilhaft kann ein Faserverbundbauteil, das mittels eines solchermaßen ausgestalteten Kerns hergestellt wird, als Medienspeicher eingesetzt werden.

Die erfindungsgemäße Verwendung betrifft einen Kern in Kombination mit einer Blasform. Dabei ist der Kern als Hohlform ausgebildet und aus Faserverbundmaterial hergestellt und weist eine Faserverstärkung weitestgehend nur in einer Richtung auf, wobei als Richtung der Faserverstärkung die Hauptbelastungsrichtung des Kerns bei der Faserablage auf dem Kern gewählt wird, wobei bei Betätigung der Blasform im Inneren des Kerns ein Aufbrechen des Kerns in Richtung der Faserverstärkung erfolgt.

Erfindungsgemäß erfolgt die Verwendung des Kerns in Kombination mit der Blasform für die Faserablage bei der Herstellung von Faserverbundbauteilen in Form von Hohlkörpern. Bevorzugt erfolgt die Faserablage durch Flechten und/oder Wickeln, z. B. roboterbasiertes Wickeln, da die Faserverstärkung des Kerns die hohen Zugkräfte, insbesondere beim Flechten, hierbei gut aufnehmen kann.

Vorteilhaft können so komplexe Bauteile auf einfache und kostengünstige Art und Weise hergestellt werden. Der zerborstene Kern wird vollständig in das herzustellende Bauteil integriert, und die Fasern erhöhen die mechanische Belastbarkeit des herzustellenden Faserverbundbauteils. Da der Kern erfindungsgemäß im herzustellenden Faserverbundbauteil verbleibt und unlösbar mit diesem verbunden wird, ist die äußere Oberfläche des Kerns aus Fasern und Matrixmaterial (Harz) geformt und nicht beschichtet. In einer bevorzugten Ausgestaltung sind Flechtaufnahmen in die äußere Oberfläche des Kerns eingearbeitet, z. B. eingesteckt.

Das erfindungsgemäße Verfahren zur Herstellung eines Faserverbundbauteils weist die folgenden Verfahrensschritte auf.

In einem ersten Schritt a) erfolgt die Bereitstellung eines oben beschriebenen Kerns zur Faserablage.

Die Herstellung eines solchen Kerns kann auf verschiedene Arten erfolgen, von denen im Folgenden einige, insbesondere für Kohlenstofffasern, beispielhaft aufgeführt sind.

Eine Art der Herstellung eines Kerns wie oben beschrieben betrifft einzelne Kohlenstofffasern, die etwa durch Gummifäden verknüpft als Gewebeschlauch vorliegen, mit Matrixmaterial, z. B. einem Harz, benetzt werden und durch ein Blasformverfahren von innen an ein mehrteiliges Kernformwerkzeug gepresst und ausgehärtet werden. Die einzelnen Kohlenstofffasern sind danach durch Reinharz verbunden, so dass die Stabilität des Kerns bei der Faserablage gesichert ist. Das Reinharz kann beim späteren Blasformprozess zur Herstellung eines Faserverbundbauteils in Richtung der Kohlenstofffasern aufgebrochen werden.

Bei einer weiteren Art der Herstellung eines Kerns wie oben beschrieben werden Kohlenstofffasern zur Kernherstellung mit einem Thermoplastfaser-Geflechtschlauch an ein Kernformwerkzeug gepresst und konsolidiert. Diese Art der Herstellung des Kerns wird insbesondere zur Herstellung eines Faserverbundbauteils mit dem erfindungsgemäßen Verfahren eingesetzt.

Eine weitere Möglichkeit der Kernherstellung besteht durch das Auflaminieren von mit Harz benetzten Kohlenstofffasern auf einen schmelzbaren oder wasserlöslichen Hilfskern, etwa mittels Kohlenstofffaserpatches oder Kohlenstofffaserschläuchen. Der Hilfskern kann entfernt werden, und der resultierende Schalenkern wird für die Herstellung eines Faserverbundbauteils mit dem erfindungsgemäßen Verfahren genutzt.

Ein weiterer Weg zur Kernherstellung betrifft das Resin Transfer Moulding (RTM) Verfahren. Nach erfolgter Faserablage in einem Werkzeug wird das Harz unter gegenüber den Umgebungsbedingungen deutlich erhöhtem Druck und erhöhter Temperatur in eine geschlossene Form infiltriert. Zwei in dieser Weise konsolidierte Halbschalen können im Anschluss zu einem Kern zusammengefügt werden.

Weitere Arten der Herstellung des Kerns betreffen das 0°-Wickeln oder die Pultrusion.

Im folgenden Schritt b) des erfindungsgemäßen Verfahrens erfolgt die Faserablage auf den Kern. Dies kann beispielsweise durch manuell unterstützte Ablage von Fasern, mittels Wickeln oder Flechten erfolgen, wobei das Verfahren für Flechten besonders geeignet ist, da die hohen entstehenden Zugkräfte durch die Faserverstärkung besonders gut aufgenommen werden können. Eine weitere vorteilhafte Art der Faserablage auf dem Kern ist das roboterbasierte Wickeln.

Der Kern mit dem Fasergelege wird dann in ein Formwerkzeug eingelegt.

Im folgenden Schritt c) erfolgt die Betätigung einer Blasform im Inneren des Kernes. Die Blasform kann dabei direkt vor Schritt c) sowie vor oder nach dem Einlegen des Kerns mit den auf ihm abgelegten Fasern in das Formwerkzeug in den Kern eingebracht worden sein oder zu einem anderen Zeitpunkt. Die Betätigung der Blasform erfolgt durch Einbringen eines flüssigen oder gasförmigen Mediums, im einfachsten Fall durch das Aufpumpen mit Luft. Die Blasform vergrößert dabei ihr Volumen und legt sich an die innere Oberfläche des Kerns an. Die Blasform kann beispielsweise aus Vakuumfolie gefertigt sein.

Im folgenden Schritt d) wird Matrixmaterial in die Kavität zwischen Blasform und Formwerkzeug in das Fasergelege injiziert und in Schritt e) insbesondere unter Druck konsolidiert.

Die Reihenfolge insbesondere der Schritte c) und d) kann auch umgekehrt sein, so dass Schritt d) vor Schritt c) ausgeführt wird.

Ein typisches, die Verfahrensschritte c) bis e) umfassendes Verfahren ist das Resin Transfer Moulding (RTM) Verfahren in Kombination mit dem Schlauchblasverfahren, auch als Schlauchblasinfiltrationsprozess bezeichnet. Wahlweise kann erst die Betätigung der Blasform erfolgen, also Druck im Schlauch aufgebaut werden, und im Anschluss daran das Matrixmaterial in das Fasergelege injiziert werden, oder die Injektion des Matrixmaterials in das Fasergelege erfolgt vor Betätigung der Blasform.

Weitere mögliche Infiltrationsverfahren sind VAP (Vacuum Assisted Process) oder VARI (Vacuum Assisted Resin Infusion), bei denen über einen Infusionsprozess das Matrixmaterial ins Fasergelege gelangt. Dabei liegt der VAP-Schlauch innerhalb des Kerns und presst das Fasergelege als Preform gegen ein festes Außenwerkzeug. In Kombination mit einem Autoklaven kann dabei die Aufweitung des Kerns und damit die Verpressung nach oder während der Infiltration geregelt werden.

Besonders bevorzugt weist der Kern das gleiche Matrixmaterial wie das herzustellende Faserverbundbauteil auf. Vorteilhaft verbindet sich so der Kern besser mit dem Faserverbundbauteil.

Besonders bevorzugt ist das Matrixmaterial duroplastisch oder mineralisch. Des Weiteren können auch Thermoplaste als Matrixmaterial verwendet werden, die mittels In-situ Polymerisation nach der Infiltration bzw. Infusion vernetzen.

In einer besonderen Variante des Verfahrens wird als Blasform ein wie oben näher beschriebener druckdichter Liner verwendet, der im Kern verbleibt.

Gegenstand der Offenbarung ist auch ein Faserverbundbauteil, welches mit dem erfindungsgemäßen Verfahren hergestellt ist bzw. welches den Kern wie oben beschrieben enthält.

Ausführungsbeispiele der Erfindung werden nachfolgend anhand von Figuren erläutert, ohne die Erfindung auf diese zu beschränken.

Die Fig. 1 zeigt eine erfindungsgemäße Anordnung aus einem Kern und einer Blasform sowie die Verwendung des Kerns in Kombination mit der Blasform bei der Herstellung eines Faserverbundbauteils.

Fig. 2 illustriert die Herstellung des Kerns 1 in einem RTM-Werkzeug.

Fig. 3 zeigt einen mit einer erfindungsgemäßen Anordnung aus Kern und Blasform hergestellten Längsträger.

Fig. 4 zeigt den Lagenaufbau bei der Herstellung eines Bauteils mit der erfindungsgemäßen Anordnung aus Kern und Blasform.

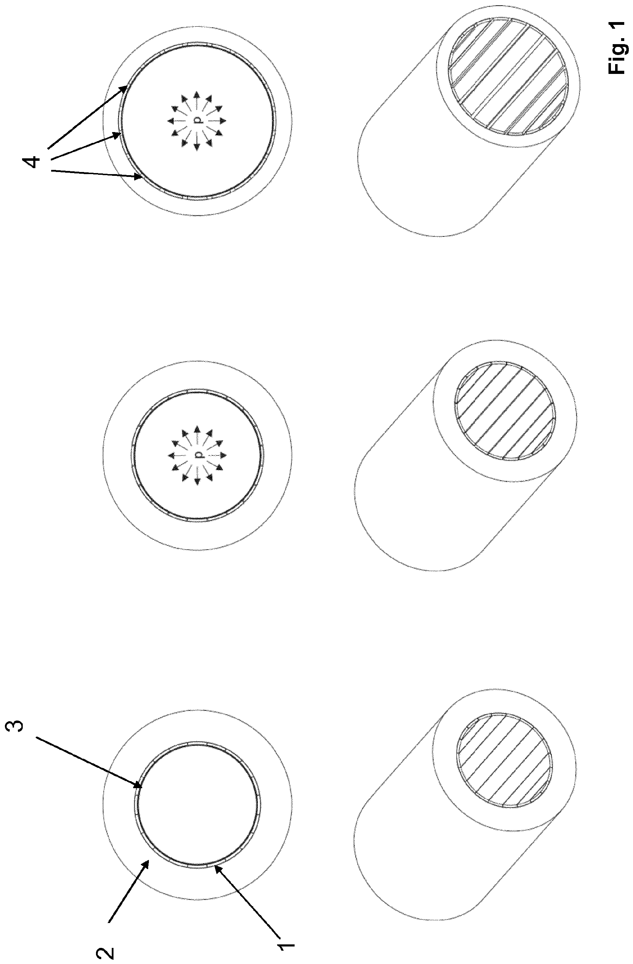

Fig. 1 zeigt eine Anordnung aus einem Kern 1 und einer Schlauchblasform 3 zur Herstellung eines Bauteils und deren Verwendung bei der Herstellung eines Faserverbundbauteils.

Der in der Fig. 1 gezeigte Kern 1 hat ausschließlich Faserlagen in Längsrichtung. Das Matrixmaterial des Kernes 1 ist das gleiche Epoxidharz wie das des herzustellenden Längsträgers. Nachdem die Faserablage zur Herstellung des Faserverbundaufbaus 2 auf den Kern 1 mittels Flechten erfolgt ist, wird eine Schlauchblasform 3 in den Kern 1 eingeführt und der Kern 1 anschließend in ein RTM-Werkzeug (nicht dargestellt) eingelegt. Bei der Konsolidierung bricht die Schlauchblasform 3 den Kern 1 in Längsrichtung auf, wobei die Bruchstellen 4 etwa parallel zu den Fasern verlaufen, und der Umfang des Kerns 1 vergrößert wird. Die Innenkontur des herzustellenden Längsträgers wird somit durch die Schlauchblasform 3 bestimmt. Durch das Aufbrechen kann die Schlauchblasform 3 von innen Druck p auf den Kern 1 und das herzustellende Bauteil aufbringen. Der in Längsrichtung zerbrochene Kern 1 wird im RTM-Verfahren vollständig vom Matrixmaterial umspült und so in den Längsträger integriert. Vorteilhaft erhöhen die Fasern des Kernes 1 im fertigen Längsträger dessen Stabilität.

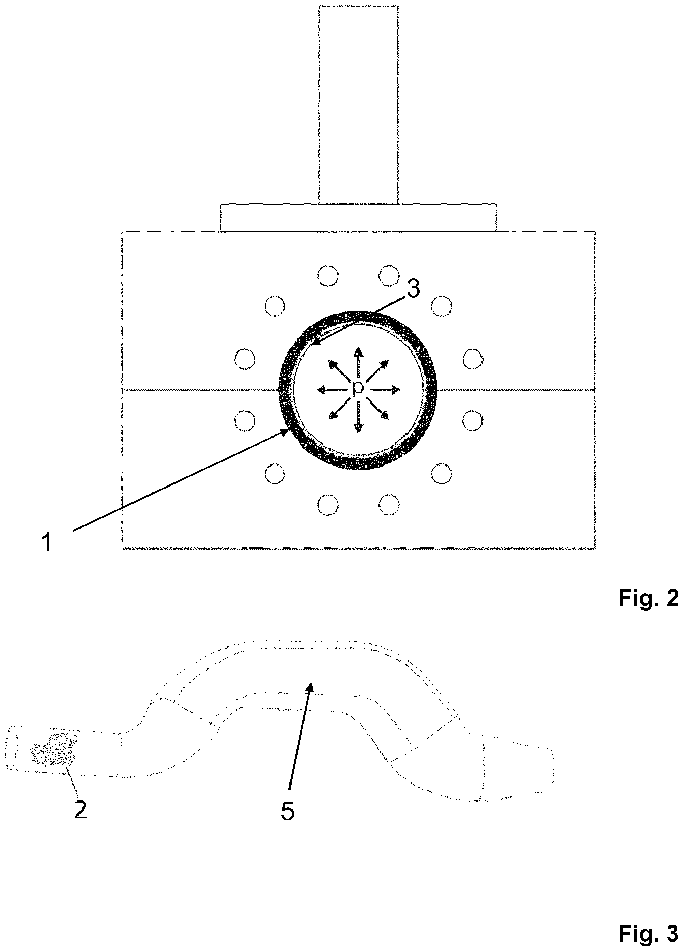

Fig. 2 illustriert die Herstellung des Kerns 1 in einem RTM-Werkzeug. Es liegen je nach Komplexität der Kernform mindestens 2 Werkzeugteile vor. In die Werkzeugteile werden vor dem Zusammenbau unidirektionale Fasern eingelegt. Mindestens eine Lage wird bei geschlossenem Werkzeug eingelegt und gegen die Außenwand durch einen Druckschlauch gepresst. Alternativ kann der Kern auf einem verlorenen Hilfskern hergestellt werden, der nach der Fertigung des Schalenkerns entfernt wird. Die unidirektionalen Fasern werden entweder vorimprägniert (Harz) in die Werkzeugteile gelegt oder es wird zum Verpressen ein Vakuumschlauch benutzt, der zum Teil luftdurchlässig sein kann, mit dem eine VARI- bzw. VAP-Infiltration durchgeführt werden kann. Alternativ kann Prepreg-Material in das Werkzeug eingelegt werden, das mit einem einfachen Druck- oder Vakuumschlauch gegen das Außenwerkzeug verpresst wird.

Fig. 3 zeigt ein mit einem Kern in Kombination mit einer Blasform hergestelltes, komplexes Faserverbundbauteil in Form eines Längsträgers (z. B. im Lastkraftwagen unterhalb der Fahrerkabine). Der Längsträger ist doppelt gekrümmt mit veränderlichem Querschnitt und wird so an der Antriebswelle vorbeigeführt. Die Querschnitte des Längsträgers sind in Längsrichtung unterschiedlich ausgestaltet, um den Anforderungen an die angreifenden Kräfte zu entsprechen.

Der Faserverbundaufbau 2 des Längsträgers besteht aus Fasern in Längsrichtung (0°) und Fasern im ausgeglichenen Winkelverbund (AWV), wobei die Fasern in +/- 30°- bis +/- 75°-Richtung je nach Bauteilbereich liegen. Fasern in 0°-Richtung bestehen aus Hochmodul-Fasern. Im AWV werden HT-Fasern (high tension) verwendet. Als Matrix wird für den Längsträger ein Epoxidharz eingesetzt.

Der Kern 1 wird unter Verwendung eines Kohlenstofffaser-Gummiband-Gewebeschlauchs hergestellt, der mit Harz benetzt wird und mittels eines aufblasbaren Schlauchs 3 von innen an ein Kernformwerkzeug verpresst wird. Für die Flechtfertigung des Längsträgers werden außerdem Flechtaufnahmen (nicht dargestellt) in die äußere Oberfläche des Kerns 1 eingesteckt, mit denen das Handling mittels eines 6-Achs-Handlingsroboters im Flechtprozess möglich ist.

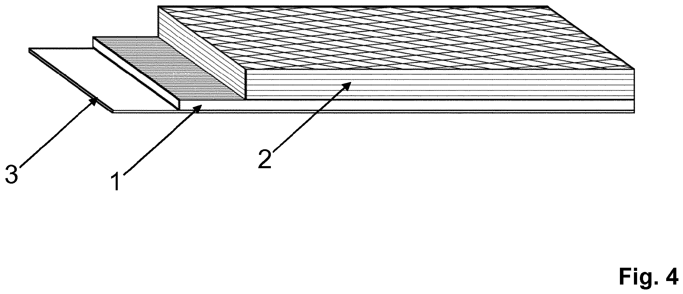

Fig. 4 zeigt den Lagenaufbau bei der Herstellung eines Bauteils mit dem Kern in Kombination mit der Blasform. Im Inneren liegt die Blasform 3 (hier ein druckdichter PE-Liner), darüber der Kern 1 und darüber das Bauteil mit dem Faserverbundaufbau 2.

### Bezugszeichenliste

1 Kern
2 Fasergelege bzw. Faserverbundaufbau des Faserverbundbauteils
3 Blasform oder Liner
4 Sollbruchstellen
p Druck
5 Faserverbundbauteil

## Patentansprüche

1. Anordnung aus einem Kern (1) und einer Blasform (3) zur Herstellung von Faserverbundbauteilen (5), wobei der Kern als Hohlform ausgebildet ist, und wobei der Kern aus Faserverbundmaterial hergestellt ist, **dadurch gekennzeichnet, dass** der Kern (1) eine Faserverstärkung weitestgehend nur in einer Richtung aufweist, wobei als Richtung der Faserverstärkung die Hauptbelastungsrichtung des Kerns (1) bei der Faserablage auf dem Kern gewählt ist, wobei der Kern so ausgestaltet ist, dass bei Betätigung der Blasform (3) im Inneren des Kerns (1) ein Aufbrechen des Kerns (1) in Richtung der Faserverstärkung erfolgt.

2. Anordnung nach Anspruch 1, **dadurch gekennzeichnet, dass** die Faserverstärkung in Längsrichtung des Kerns (1) ausgebildet ist.

3. Anordnung nach Anspruch 1 oder 2, **dadurch gekennzeichnet, dass** der Kern an seiner inneren Oberfläche Sollbruchstellen (4) aufweist.

4. Anordnung nach einem der Ansprüche 1 bis 3, **dadurch gekennzeichnet, dass** die Blasform (3) ein Liner ist, auf dem das Faserverbundmaterial des Kerns (1) angeordnet ist.

5. Verwendung eines Kerns (1) in Kombination mit einer Blasform (3) für die Faserablage zur Herstellung von Faserverbundbauteilen in Form von Hohlkörpern, wobei der Kern als Hohlform ausgebildet und aus Faserverbundmaterial hergestellt ist und eine Faserverstärkung weitestgehend nur in einer Richtung aufweist, wobei als Richtung der Faserverstärkung die Hauptbelastungsrichtung des Kerns (1) bei der Faserablage auf dem Kern gewählt ist, wobei bei Betätigung der Blasform (3) im Inneren des Kerns (1) ein Aufbrechen des Kerns (1) in Richtung der Faserverstärkung erfolgt.

6. Verwendung nach Anspruch 5, **dadurch gekennzeichnet, dass** die Faserverstärkung in Längsrichtung des Kerns (1) ausgebildet ist.

7. Verwendung nach Anspruch 5 oder 6, **dadurch gekennzeichnet, dass** der Kern an seiner inneren Oberfläche Sollbruchstellen (4) aufweist.

8. Verfahren zur Herstellung eines Faserverbundbauteils aufweisend zumindest die folgenden Verfahrensschritte:
a) Bereitstellung eines Kerns (1) zur Faserablage, wobei der Kern als Hohlform ausgebildet und aus Faserverbundmaterial hergestellt ist und eine Faserverstärkung weitestgehend nur in einer Richtung aufweist, wobei als Richtung der Faserverstärkung die Hauptbelastungsrichtung des Kerns (1) bei Faserablage auf dem Kern gewählt ist,
b) Faserablage auf dem Kern (1),
c) Betätigung einer Blasform (3) im Inneren des Kerns (1), wodurch der Kern (1) in der Faserrichtung aufreißt,
d) Infiltrieren des Fasergeleges (2) mit Matrixmaterial, und
e) Konsolidierung des Matrixmaterials.

9. Verfahren nach Anspruch 8, **dadurch gekennzeichnet, dass** der Kern (1) das gleiche Matrixmaterial wie das herzustellende Faserverbundbauteil aufweist.

10. Verfahren nach Anspruch 8 oder 9, **dadurch gekennzeichnet, dass** die Faserablage auf dem Kern (1) in Schritt b) durch Flechten und/oder Wickeln erfolgt.

11. Verfahren nach einem der Ansprüche 8 bis 10, **dadurch gekennzeichnet, dass** das Matrixmaterial duroplastisch oder mineralisch ist.

## Claims

1. Arrangement composed of a core (1) and a blow mold (3) for producing fiber composite components (5), the core being designed as a hollow mold, and the core being made of fiber composite material, **characterized in that** the core (1) has a fiber reinforcement substantially in one direction only, the direction of the fiber reinforcement being designated as the main direction of loading of the core (1) when the fibers are deposited on the core, the core being designed in such a way that, when the blow mold (3) is actuated in the interior of the core (1), the core (1) breaks open in the direction of the fiber reinforcement.

2. Arrangement according to Claim 1, **characterized in that** the fiber reinforcement as being formed in the longitudinal direction of the core (1).

3. Arrangement according to Claim 1 or 2, **characterized in that** the core as having predetermined breaking points (4) on its inner surface.

4. Arrangement according to one of Claims 1 to 3, **characterized in that** the blow mold (3) is a liner on which the fiber composite material of the core (1) is arranged

5. Use of a core (1) in combination with a blow mold (3) for fiber deposition for producing fiber composite components in the form of hollow bodies, the core being designed as a hollow mold and being produced from fiber composite material and having a fiber reinforcement substantially in one direction only, the direction of the fiber reinforcement being designated as the main direction of loading of the core (1) when the fibers are deposited in the core, the core (1) being broken open in the direction of the fiber reinforcement when the blow mold (3) is actuated in the interior of the core (1).

6. Use according to Claim 5, **characterized in that** the fiber reinforcement is formed in the longitudinal direction of the core (1).

7. Use according to Claim 5 or 6, **characterized in that** the core has predetermined breaking points (4) on its inner surface.

8. Method of manufacturing a fiber composite component composing of at least the following steps:
(a) Producing a core (1) for fiber depositing, the core being designed as a hollow shape and made of fiber composite material and having a fiber reinforcement substantially in one direction only, the main load direction of the core (1) being designated as the direction of the fiber reinforcement when fiber depositing on the core,
(b) fiber deposit on the core (1),
(c) actuation of a blow mold (3) inside the core (1), whereby the core (1) tears in the fiber direction,
(d) infiltrating the fiber sheet (2) with matrix material, and
(e) consolidation of the matrix material.

9. Method according to Claim 8, **characterized in that** the core (1) has the same matrix material as the fiber composite component to be produced.

10. Method according to claim 8 or 9, **characterized in that** the fiber deposition on the core (1) in step b) is effected by braiding and/or winding.

11. A method according to any one of claims 8 to 10, **characterized in that** the matrix material is thermosetting or mineral.

## Revendications

1. Ensemble d'un noyau (1) et d'un moule de soufflage (3) permettant la fabrication de composants composites en fibres (5), le noyau étant réalisé sous forme d'un moule creux, et le noyau étant fabriqué à partir d'un matériau composite en fibres, **caractérisé en ce que** le noyau (1) présente un renfort de fibres dans la mesure du possible selon un seul sens, le sens de charge principal du noyau (1) étant choisi comme sens du renfort de fibres lorsque les fibres sont déposées sur le noyau, le noyau étant conçu de telle sorte que lors de l'actionnement du moule de soufflage (3) à l'intérieur du noyau (1), le noyau (1) est éclaté dans le sens du renfort de fibres.

2. Ensemble selon la revendication 1, **caractérisé en ce que** le renfort de fibres est réalisé dans le sens longitudinal du noyau (1).

3. Ensemble selon la revendication 1 ou 2, **caractérisé en ce que** le noyau présente des points de rupture cibles (4) sur sa surface intérieure.

4. Ensemble selon l'une des revendications 1 à 3, **caractérisé en ce que** le moule de soufflage (3) est un revêtement sur lequel est disposé le matériau composite en fibres du noyau (1).

5. Utilisation d'un noyau (1) en combinaison avec un moule de soufflage (3) pour le dépôt de fibres en vue de la fabrication de composants composites en fibres sous forme de corps creux, le noyau étant réalisé sous forme d'un moule creux et étant fabriqué à partir d'un matériau composite en fibres et présentant un renfort de fibres dans la mesure du possible selon un seul sens, le sens de charge principal du noyau (1) étant choisi comme sens du renfort de fibres lorsque les fibres sont déposées sur le noyau, le noyau (1) étant éclaté dans le sens du renfort de fibres lors de l'actionnement du moule de soufflage (3) à l'intérieur du noyau (1).

6. Utilisation selon la revendication 5, **caractérisée en ce que** le renfort de fibres est réalisé dans le sens longitudinal du noyau (1).

7. Utilisation selon la revendication 5 ou 6, **caractérisée en ce que** le noyau présente des points de rupture cibles (4) sur sa surface intérieure.

8. Procédé de fabrication d'un composant composite en fibres présentant au moins les étapes de procédé suivantes :
a) fourniture d'un noyau (1) pour le dépôt de fibres, le noyau étant réalisé sous forme d'un moule creux et fabriqué à partir d'un matériau composite en fibres et présentant un renfort de fibres dans la mesure du possible selon un seul sens, le sens de charge principal du noyau (1) étant choisi comme sens du renfort de fibres lorsque des fibres sont déposées sur le noyau,
b) dépôt de fibres sur le noyau (1),
c) actionnement d'un moule de soufflage (3) à l'intérieur du noyau (1), suite à quoi le noyau (1) se déchire dans le sens des fibres,
d) infiltration de la structure de fibres (2) avec un matériau de matrice, et
e) consolidation du matériau de matrice.

9. Procédé selon la revendication 8, **caractérisé en ce que** le noyau (1) présente le même matériau de matrice que le composant composite en fibres à fabriquer.

10. Procédé selon la revendication 8 ou 9, **caractérisé en ce que** les fibres sont déposées sur le noyau (1) à l'étape b) par tressage et/ou bobinage.

11. Procédé selon l'une des revendications 8 à 10, **caractérisé en ce que** le matériau de matrice est thermodurcissable ou minéral.
